# EUROPEAN PATENT SPECIFICATION

(11) **EP 2 353 971 B1**
(45) Date of publication and mention of the grant of the patent: **24.09.2014**
(21) Application number: 10151403.2
(22) Date of filing: 22.01.2010
(51) Int. Cl.: B62D 21/15

(54) **Crash-energy management structure**
Crash-Energie Verwaltungsstruktur
Structure de gestion d'énergie d'écrasement

(43) Date of publication of application: 10.08.2011
(73) Proprietor: Volvo Car Corporation, 405 31 Göteborg (SE)
(72) Inventor: Fermer, Mikael, 43349, Partille (SE); Nedic, Stevan, 41670, Göteborg (SE); Swahn, Martin, 43093, Hälsö (SE); Önal, Håkan, 41676, Göteborg (SE); Lees, John, 44836, Floda (SE)
(74) Representative: Widahl, Jenny Marie

(56) References cited:
- US-A1- 2006 076 800
- US-A1- 2008 283 317
- US-A1- 2008 283 318

## Description

### TECHNICAL FIELD

The present invention relates to a crash energy management structure intended to be mounted at the rear or front portion of a vehicle for protecting an energy source containment unit of the vehicle in case of a crash. The invention further relates to a vehicle comprising an energy source containment unit and a crash energy management structure.

### BACKGROUND OF THE INVENTION

Today many vehicles are totally or partly electrically powered, such as electrical vehicles or hybrid vehicles. Normally for such vehicles, an energy source containment unit is used for storing energy. The energy source containment unit may for example comprise a battery pack or a fuel cell. The energy source containment unit may be secured to a floor panel, a side member, a cross member or a similar support member. The energy source containment unit is sensitive to deformations and should preferably be protected from impacts due to various crash situations.

Document US 5,681,057 by Whirley and Engelmann discloses a crash energy management structure, which functions either to prevent an energy source containment unit from moving with respect to the vehicle as a result of a collision or to enhance the strength of the crash zone, or both. In a first embodiment, the crash energy management structure is added to the frontal crash zone and provides more structure for the additional kinetic energy, which is due to the increased weight, to do "work" on, thus allowing the vehicle to decelerate at a reduced rate compared to using only the crash zone. In another embodiment, the crash energy management structure is rigid and is located between the energy source containment unit and a hard point of the vehicle primary structure. The crash energy management structure is in that case designed with enough strength and stiffness to prevent the energy source containment unit from moving forward in the vehicle in case of a frontal collision.

However, the suggested crash energy management structure of US 5,681,057 has a rather complicated shape and structure, especially since it comprises a plurality of members. There is therefore a desire to find a more simple structure.

Document US 2008/283317 A1 by Wagner et al., which disclosure has been taken as basis for the preamble features of claim 1, discloses a protective housing for a vehicle battery, and a motor vehicle equipped. The protective housing comprises two transverse walls and two longitudinal walls, which together form a lateral enclosure for a battery receptacle chamber. A floor structure delimiting the battery receptacle chamber on the bottom is provided, which has at least two floor cross members fastened to the enclosure. A ceiling structure delimiting the battery receptacle chamber on top is provided, which has at least two ceiling cross members fastened to the enclosure.

Document US 2008/283318A1 by Wagner et al discloses a protective housing for a battery in a motor vehicle. The protective housing comprises two transverse walls and two longitudinal walls, which together form a lateral enclosure for a battery receptacle chamber. The protective housing is fastened to at least one longitudinal girder of the vehicle in the installed state in an installation chamber of the vehicle. The transverse walls and the longitudinal walls are each formed by separate components, which are assembled into the enclosure. The installation chamber is located between two longitudinal girders of the vehicle chamber, and the enclosure is fastened to both longitudinal girders.

Document US 2006/076800 A1 by Pierce et al discloses a carrier for use in supporting a component in a vehicle structure. The carrier comprises at least a pair of side rails each having a first end and an opposed second end. The first and second ends of the side rails are attached to the vehicle structure, and each side rail includes a predetermined bending location at a predetermined location between the first and second ends. The component is adapted to be attached to the side rails intermediate the predetermined bending location and the first end. The side rails are operable to bend about the predetermined bending location when an impact load is applied to the first end of the side rails.

In many vehicles, the energy source containment unit is located in the rear portion of the vehicle, e.g. behind the back seat of a car. It is in that case especially important to protect the energy source containment unit in case of a rear collision, due to the short distance between the rear side of the energy source containment unit and the rear end of the vehicle. In other vehicles, the energy source containment unit is located in the front portion of the vehicle, and it is in that case especially important to protect the energy source containment unit in case of a frontal collision.

### SUMMARY OF THE INVENTION

The object of the present invention is to overcome or ameliorate at least one of the disadvantages of the prior art, or to provide a useful alternative.

It is desirable to provide a less complicated crash energy management structure than the ones according to known technology.

It is further desirable to provide a crash energy management structure protecting an energy source containment unit in case of a collision, especially to protect an energy source containment unit located in the rear portion of the vehicle in case of a rear collision and/or an energy source containment unit in the front portion of the vehicle in case of a frontal collision.

The object above may be achieved by the invention according to claim 1.

In a first aspect of the present invention there is provided a crash energy management structure intended be mounted at the rear or front portion of a vehicle for protecting an energy source containment unit of the vehicle in case of a crash. The crash energy management structure comprises
- a first member, comprising a transverse portion extending in the transverse direction of the vehicle, the first member further having an inclined portion at each transversal end of the transverse portion,
- a second member, being parallel to the transverse portion of the first member and connecting the inclined portions or additional portions of each side of the first member, such that a frame-shaped structure is formed, wherein the frame-shaped structure is adapted to be positioned between the energy source containment unit of the vehicle and a rear or front end of the vehicle, with the first member being closer to the end of the vehicle than the second member.

Terms such as "front", "rear", "forwards", "rearwards", "in front of" and "behind" used herein relate to the vehicle. The vehicle further has a longitudinal direction, going from the front end to the rear end, and a transverse direction being perpendicular to the longitudinal direction, going from one side of the vehicle to the other.

In case of a collision, the end of the vehicle may be subjected to an impacting force, e.g. when being hit by another vehicle. The crash energy management structure can then act as an additional load path and transfer load from the impact to the main structure of the vehicle. This reduces the intrusion of the vehicle and thereby the risk of clamping the energy source containment unit. The crash energy management structure according to the invention is therefore able both to offer an additional load path and to protect the energy source containment unit.

Further, with a crash energy management structure according to the invention, the crash load may be effectively distributed between the side members of the main structure, for example in a crash, wherein only a portion of the front/ rear end of the vehicle is subject to an impact or wherein the front/ rear is impacted from an oblique angle. Moreover, the second member will help to take up lateral forces, e.g. in the event of a side crash or a crash at an oblique angle at the side of the vehicle.

Another advantage of the crash energy management structure according to the invention is that objects outside of the energy source containment unit may be mounted to the crash energy management structure instead of directly to e.g. the floor of the vehicle. By "outside of" is meant that these objects are positioned closer to the respective end of the vehicle than to the energy source containment unit.

An energy source containment unit is used for storing energy. The energy source containment unit may for example comprise a battery pack or a fuel cell. The energy source containment unit is attached to and supported by the main structure of the vehicle, for example the side members.

The crash energy management structure according to the invention may be located either in the front portion or the rear portion of the vehicle. The front position is especially useful when the energy source containment unit is located at the front of the vehicle. In the same way the rear position is especially useful when the energy source containment unit is located at the rear of the vehicle. Crash energy management structures may also be used in both the front and rear portion of a certain vehicle. The crash energy management structure of the invention is especially useful in an electrically driven vehicle or a hybrid vehicle with the purpose of protecting the energy source containment unit, but it may of course also be used in a vehicle with conventional fuel-driven propulsion.

The first and the second member may be formed as one integral structure, or may be formed as two separate members which are attached to each other to form the frame-shaped structure.

In a preferred embodiment, the transverse extension of the transverse portion of the first member is less than the transverse extension of the second member. Thereby, the frame-shaped structure gets a configuration suitable for distributing impact forces between side members of the main structure of the vehicle. The transverse extension of the transverse portion of the first member may be 10-1000 mm, preferably 200-700 mm and most preferably 300-500 mm.

The inclined portions of the first member may form an angle β with the transverse portion of the same first member, the angle β being between 10° and 90°, preferably between 15° ° and 80 °, and most preferably between 20° and 65°. The first member may have an extension in the longitudinal direction of the vehicle of 100-500 mm, preferably 100-300 mm and most preferably 120-200 mm. In a preferred embodiment, the angle β is the same for both inclined portions.

The measures of crash energy management structure are suitably adapted to the vehicle, wherein the crash energy management structure is positioned. The measures given above are suitable for a car.

The crash energy management structure may further comprise two connection members, being attached one at each transverse side of the crash energy management structure. The connection members are in that case adapted for attachment of the crash energy management structure to the main structure of the vehicle, e.g. to the side members.

In an embodiment, the crash energy management structure is adapted to form a bending centre, such that, in a collision situation, the portion of the crash energy management structure being located outside of the bending centre is bendable around the bending centre. The portion of the crash energy management structure being located outside of the bending centre is thereby displaced in relation to the portion of the crash energy management structure being located inside of the bending centre. The displacement movement may be rotational around the bending centre and/or translational. A translational movement may be vertical and/or horizontal. The movement may occur as a consequence of material deformation. The deformation of the material may in that case absorb part of the impact energy caused by the collision. After bending, the crash energy management structure may serve as a mechanical protection of the energy source containment unit. The term "inside of" means closer to the centre of the vehicle and "outside of" means closer to the nearest end of the vehicle. If the crash energy management structure is located at the front of the vehicle, "inside of" is behind and "outside of" in front of. If the crash energy management structure is located at the rear of the vehicle, "inside of" is in front of, and "outside of" is behind.

If the crash energy management structure is bendable, the connection members may form the bending centre. As an example, if the connection members are formed of a metal plate or sheet, the metal plate or sheet may be bent along a line constituting the bending centre. The deformation of the material, e.g. in the connection members, caused by the bending, will in that case absorb part of the impact energy caused by the collision, which caused the bending. By selecting the dimensions and material of the connection members, it can be governed how much energy is needed in order to bend the connection members.

In a second aspect of the present invention there is provided a vehicle comprising
- an energy source containment unit, and
- a crash energy management structure as described above.

The crash energy management structure comprises a frame-shaped structure being positioned between the energy source containment unit and the rear or front end of the vehicle.

The crash energy management structure may further comprise two connection members attached one at each transverse side of the crash energy management structure, connecting the crash energy management structure to the main structure of the vehicle, and wherein the transverse portion of the first member is attached at the rear or front end of the vehicle. The transverse portion of the first member may for example be attached to the back panel at the rear of the vehicle or to the bumper beam at the front of the vehicle. The connection members may be attached to the side members.

In an embodiment with the crash energy management structure located at the front portion of the vehicle, the material of the main structure just behind the connection members is preformed, such that, in case of a frontal collision, wherein the crash energy management structure is pushed rearwards, the material just behind the connection members is deformed out of plane, thereby forming an abutment preventing the crash energy management structure from being pushed further rearwards in the vehicle.

In a similar way with an embodiment having the crash energy management structure located at the rear portion of the vehicle, the material of the main structure just in front of the connection members is preformed, such that, in case of a rear collision, wherein the crash energy management structure is pushed forwards, the material just in front of the connection members is deformed out of plane, thereby forming an abutment preventing the crash energy management structure from being pushed further forwards in the vehicle.

If the crash energy management structure is bendable as described above, the energy source containment unit may at its side towards the crash energy management structure comprise an abutment, which is adapted to contact the crash energy management structure after moving so far that a portion of it reaches the energy source containment unit. Alternatively, or as a complement, the abutment may be located at the crash energy management structure itself. The abutment may be adapted to act as an energy absorber. The crash energy management structure may be used for mounting an object, for example a stiff and/or sharp object such as an electrical and mechanical unit, instead of mounting the object e.g. directly to the floor. In the case of a collision, the stiff and/or sharp object will then follow the movement of the crash energy management structure. In the case that the crash energy management structure is bendable, the stiff and/or sharp object may move together with the bending crash energy management structure. The predefined movement of the crash energy management structure can thus be used to move stiff and/or sharp object, so that it is not clamped between the energy source and the intruding structure.

In a third aspect of the present invention, there is provided a use of a crash energy management structure as described above for providing an additional load path in case of a collision.

In a fourth aspect of the present invention, there is provided a use of a crash energy management structure as described above for distributing load between side members of a vehicle in case of a collision.

In a fifth aspect of the present invention, there is provided a use of a crash energy management structure as described above for mechanical protection of the energy source containment unit in case of a collision. This is especially useful if the crash energy management structure is adapted to form a bending centre as described above.

### BRIEF DESCRIPTION OF THE DRAWINGS

The present invention will hereinafter be further explained by means of non-limiting examples with reference to the appended figures wherein:
- Fig. 1: is a schematic overview of a crash energy management structure according to a first embodiment of the invention seen in top view.
- Fig. 2: is the crash energy management structure of Figure 1 seen in side view.
- Fig. 3: is a schematic overview of a crash energy management structure according to a second embodiment of the invention seen in side view in a crash situation.

- Fig. 4: is the crash energy management structure of Figure 3 later on in the crash situation.
- Fig. 5: is a perspective view of the crash energy management structure of Figure 3.
- Fig. 6: illustrates a number of characterizing measures of a crash energy management structure according to the invention.
- Fig. 7: is a detailed view of an attachment of the crash energy management structure to the main structure of the vehicle in a normal state.
- Fig. 8: is a detailed view of the attachment of Figure 7 in a crash situation.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

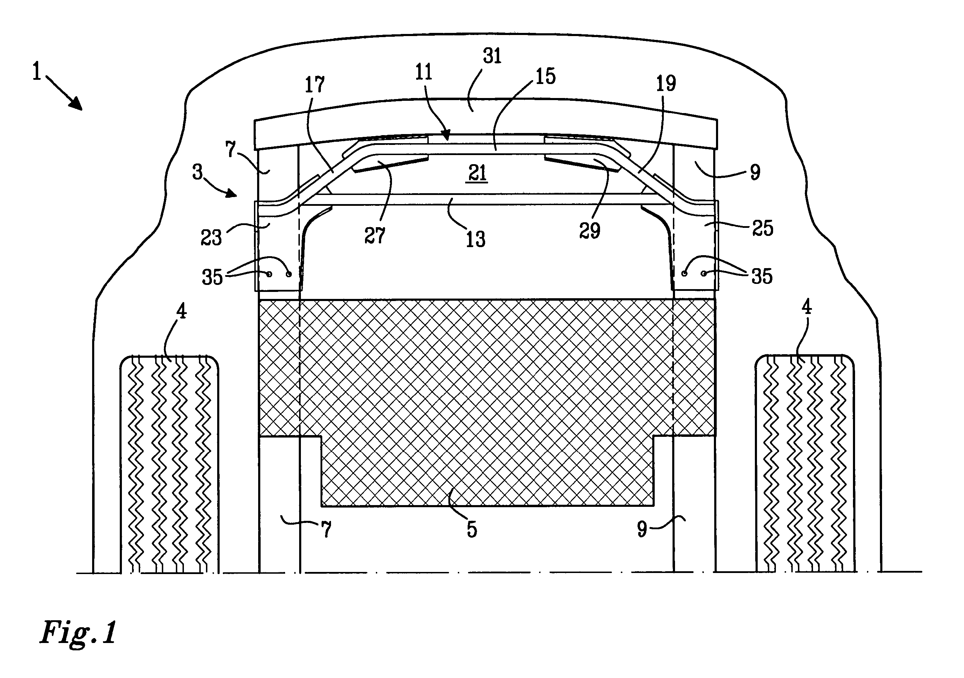

Figure 1 is a schematic overview of a crash energy management structure 3 according to a first embodiment of the invention seen in top view. The crash energy management structure 3 of this example is positioned at the rear portion of a vehicle 1 behind the rear wheels 4. An energy source containment unit 5 is used for storing energy. The energy source containment unit 5 may for example comprise a battery pack or a fuel cell. The energy source containment unit 5 is attached to and supported by the main structure of the vehicle 1, for example by the rear side members 7, 9. The crash energy management structure 3 comprises a first member 11 and a second member 13. The first member has a transverse portion 15 and two inclined portions 17, 19. The second member 13, which is parallel to the transverse portion 15 of the first member 11, connects the two inclined portions 17, 19, such that a frame-shaped structure 21 is formed.

As an option (not illustrated) the first member 11 may also comprise additional portions at either side of the vehicle 1 adjacent to the inclined portions 17, 19. The additional portions may for example extend in a longitudinal direction of the vehicle 1. In that case, the second member 13 may instead connect the additional portions.

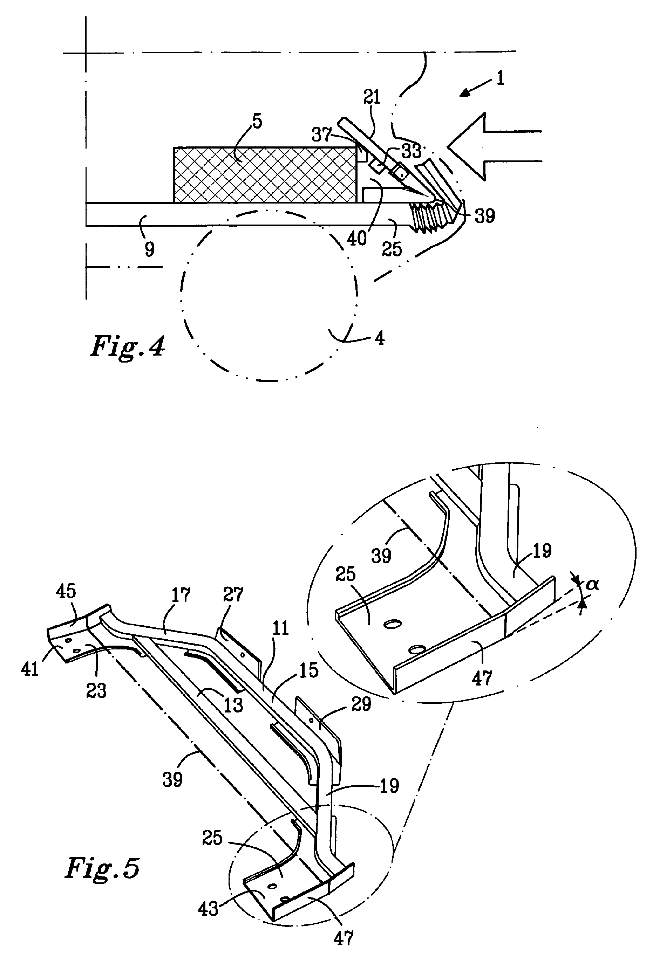

The crash energy management structure 3 comprises further two connection members 23, 25, which are used for attachment of the crash energy management structure 3 to main structure of the vehicle 1, in this case the rear side members 7, 9. Moreover, two rear connection members 27, 29 are arranged to attach the first member 11 to the back panel 31. The connection members 23, 25 may be formed of a metal plate or sheet being attached to the first 11 and/ or second member 13. The metal plate or sheet may be bent to an L-shape, as further explained in connection to Figure 5. In the same way, the rear connection members 27, 29 may be formed of metal plate or sheet, which also may be bent to L-shape in order to facilitate attachment to the back panel 31. The connection members 23, 25 are attached to the rear side members 7, 9, e.g. by means of the illustrated frame bolts 35. In the same way, the rear connection members 27, 29 may be attached to the back panel 31 with frame bolts (not illustrated).

Although the exemplified crash energy management structure 3 is illustrated as located at the rear portion of a vehicle 1, it would also be useful to use a crash energy management structure 3 according to the invention at the front end of the vehicle. It may then be located directly in front of an energy source containment unit 5 or it may be used to enhance the collision safety of the vehicle 1.

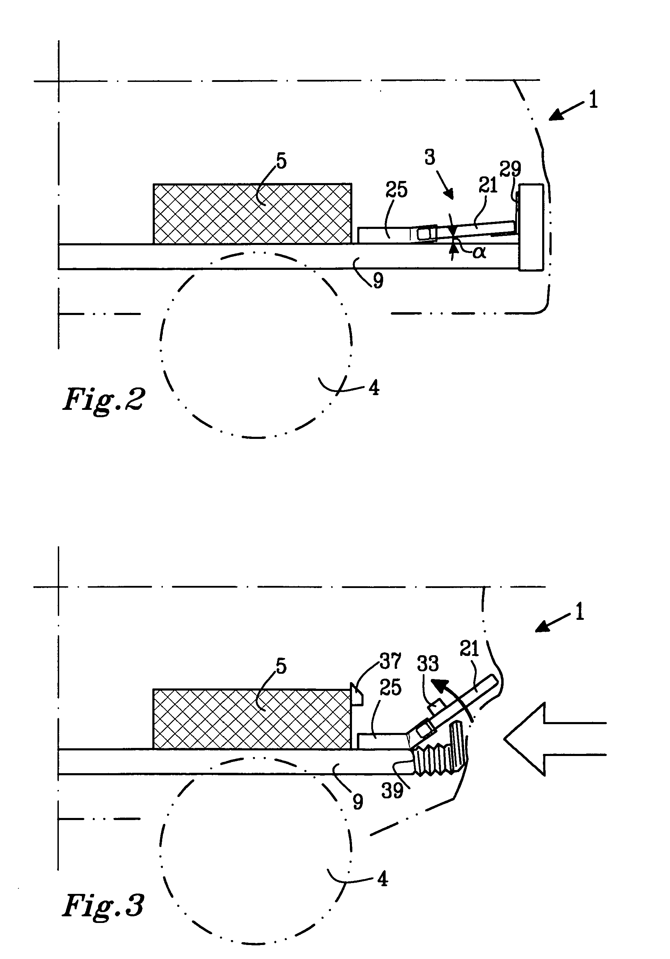

In Figure 2 a side of view of the crash energy management structure 3 is illustrated. The connecting member 25 is attached to the rear side member 9. The rear connection member 29 of this embodiment is formed of a bent metal plate or sheet, which is attached to the back panel 31. The frame-shaped structure 21 has a slight angle α in relation to the horizontal plane. Purely as an example, the angle α may be in the range of 0 to 45°, preferably 5° to 15°, most preferably 6° to 8°.

In a rear collision, the rear end of the vehicle 1 is subjected to an impacting force, e.g. being hit by another vehicle. The crash energy management structure 3 then acts as an additional load path and transfers load from a rear impact to the main structure of the vehicle 1, here the rear side members 7, 9. This reduces the intrusion and thereby the risk of clamping the energy source containment unit 5. Further with a crash energy management structure 3 according to the invention, the crash load is effectively distributed between the side members 7, 9 of the main structure, for example in a crash, wherein only a portion of the front/ rear end of the vehicle is subject to an impact or the front/ rear of the vehicle is impacted from an oblique angle. Moreover, the second member 13 will help to take up lateral forces, e.g. in the event of a side crash or a crash at an oblique angle at the side of the vehicle.

Another advantage of the crash energy management structure 3 according to the invention is that an object behind the energy source containment unit 5, for example a stiff and/or sharp object, such as an electrical and mechanical unit, may be mounted to the crash energy management structure 3 instead of for example directly to the floor.

In a second embodiment of the invention, a portion of the crash energy management structure 3 is bendable around a bending centre as illustrated in Figures 3-4. Other details of the crash energy management structure 3 of the second embodiment are similar as for the first embodiment and will therefore not be described again.

In case of a less severe collision, i.e. with lower forces involved, the crash energy management structure 3 of the second embodiment may work in the same way as described for the first embodiment above.

Figures 3-4 illustrate what happens during a severe collision, wherein the vehicle is subjected to an impacting force at the rear end, here indicated by an arrow, e.g. being hit by another vehicle. At first, the crash energy management structure 3 works as an additional load path and transfers load from a rear impact to the rear side members 7, 9 similar to as described for the first embodiment. The crash load is then effectively distributed between the rear side members 7, 9. When the impacting force reaches a certain level, the portion of the crash energy management structure 3 being located outside of a bending centre 39 starts bending around the bending centre 39. In the example, the frame-shaped structure 21 performs a rotational movement around the bending centre 39, but the movement may also be at least partly translational.

By having a slight angle α between the frame-shaped structure 21 and the horizontal plane, as illustrated in Figure 2, it may be secured that the bending movement occurs such that the frame-shaped structure 21 moves at least partly upwards, i.e. a downward movement is avoided. In the example of Figures 3-4, the frame-shaped structure 21 rotates upwards and forwards. The angle α may further be selected in order to facilitate the mounting of the crash energy management structure 3 at the rear or front end of the vehicle 1.

When the crash energy management structure 3 continues its bending movement, a part of it will eventually reach the energy source containment unit 5. Preferably an abutment 37 is provided at the rear side of the energy source containment unit 5 in order to prevent the crash energy management structure 3 from crashing into the energy source containment unit 5. Figure 4 illustrates that the upper portion of the crash energy management structure 3, i.e. the outmost portion of the crash energy management structure 3 in the normal state, has reached the energy source containment unit 5. In this position, the crash energy management structure 3 in itself provides a mechanical protection of the energy source containment unit 5. The movement during the collision, and especially during the bending, may also be influenced by deformation of part of the crash energy management structure 3 itself and/or part of the rear side members 7, 9. The crash energy management structure 3 is nevertheless able to mechanically protect the energy source containment unit 5 from objects being pushed forwards from further behind in the vehicle.

In the case that a stiff and/or sharp object 33 is mounted to the portion of the crash energy management structure 3 being located outside of a bending centre 39, the object 33 will move along with the crash energy management structure 3 in the bending movement. The attachment point is preferably selected, such that the stiff and/or sharp object 33 ends up in the space 40, which is formed between the energy source containment unit 5 and the crash energy management structure 3.

In Figure 5, the crash energy management structure 3 according to the second embodiment is shown in a perspective view. As can be gleaned from the Figure 5, the connection members 23, 25 are L-shaped having a flat part 41, 43 and a flange 45, 47. Figure 5 further indicates the position of the bending centre 39 with a dashed line. The bending centre 39 is in the example formed within the connection members 23, 25 by bending of the metal plate or sheet in the crash situation. The bending centre 39 further extends between the two connection members 23, 25 as an imaginary axis. In a severe crash situation, as described for Figures 3 and 4, the portion of the crash energy management structure 3 being located outside of the bending centre 39 will bend around the bending centre 39. The flanges 45, 47 will then provide an extra resistance to the bending, thereby being able to absorb part of the impact energy. By selecting the dimensions and material of the connection members 23, 25, it can be governed how much energy is needed in order to bend the connection members 23, 25. The selection of dimensions and material of the connection members 23, 25 may further also be used to choose at what impact force level, the crash energy management structure 3 should start to bend. As an example, the material and/or thickness of the metal plate or sheet of the connection members 23, 25 and/or the height of the flanges 45, 47 may be selected.

The bending centre 39 may be located at a preformed minor bending line as seen in the enlarged view of Figure 5. In that Figure, the connection members 23, 25 are slightly bent at the bending centre 39, when the crash energy management structure 3 is in its normal state. By such a slight bending, the frame-shaped structure 21 will get the above-mentioned slight angle α in relation to the horizontal plane, as described for Figure 2. Suitably, in that case, the bending centre 39 may be located just behind the end of the rear side member 7, 9, when the crash energy management structure 3 is mounted in the vehicle.

As an alternative to, or in combination with the slight bending, the bending centre 39 may have a preformed weakening (not illustrated) of the material of the connection members 23, 25, which forms the bending centre 39 in case of a collision.

As a further alternative (not illustrated), the bending centre 39 may be situated at the attachment of the first 11 and/or second member 13 to the connection members 23, 25. In that case, the first 11 and/or second member 13 may rotate around its attachment points to the connection members 23, 25.

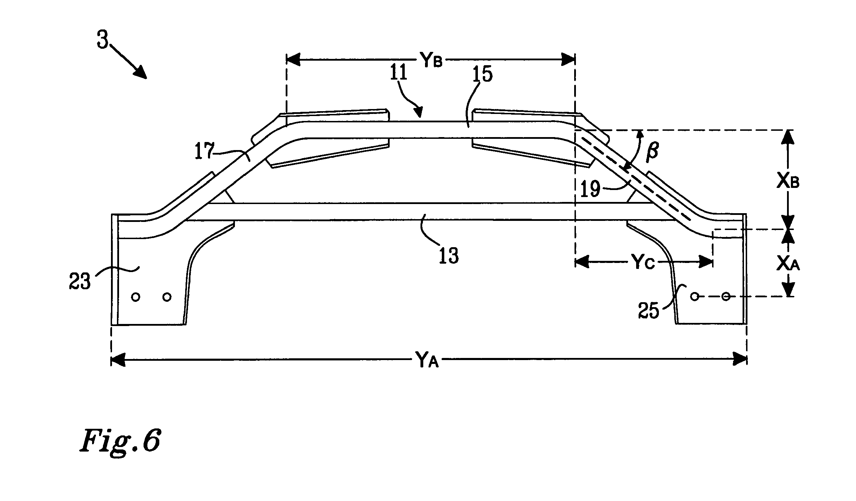

Figure 6 illustrates a number of characterizing measures of the crash energy management structure 3. The measures used in a certain vehicle are preferably adapted to the size of that vehicle. The numbers given below in Table 1 are suitable for a car.

**Table 1: Characterizing measures of the crash energy management structure**

| Measure | Operation interval [mm] | Preferred interval [mm] | Most preferred interval [mm] | Comment |
|---|---|---|---|---|
| Y_{A} | 500 - 1500 | 800 - 1300 | 900 - 1200 | Total width of the crash energy management structure 3 |
| Y_{B} | 10 - 1000 | 200 - 700 | 300 - 500 | Transverse extension of transverse portion 15 |
| Y_{C} | 10-600 | 50 - 400 | 100-300 | Transverse extension of inclined portion 17, 19 |
| X_{A} | 0 - 200 | 0-160 | 0-130 | Distance from attachment to the main structure, e.g. by the frame bolts 35, to first member 11. |
| X_{B} | 100 - 500 | 100-300 | 120 - 200 | Longitudinal extension of first member 11. |

Each of the inclined portions 17, 19 forms an angle β with the transverse portion 15 of the first member, the angle β being between 10° and 90 °, preferably between 15° and 80 °, and most preferably between 20°and 65°. For symmetry reasons preferably both inclined portions 17, 19 typically forms the same angle β

In the above Figures 1-6, the inclined portions 17, 19 are shown as straight portions. In that case, β = arctan (X_{B}/ Y_{c}). As an alternative, they may be curved. They could also comprise a plurality of straight or curved portions being slightly angled in relation to each other. The inclined portion 17, 19 is defined as a portion of the first member having both transverse and longitudinal extension. If the inclined portion is not straight, the angle β is defined by means of a line going through the endpoints of the inclined portion.

Moreover, Figures 1-6 illustrate embodiments, wherein the inclined portion 17, 19 transform into a transverse portion at the side of the vehicle. This facilitates the attachment to the connection members 23, 25, but it would also be possible to let the inclined portions 17, 19 go all the way out to the sides.

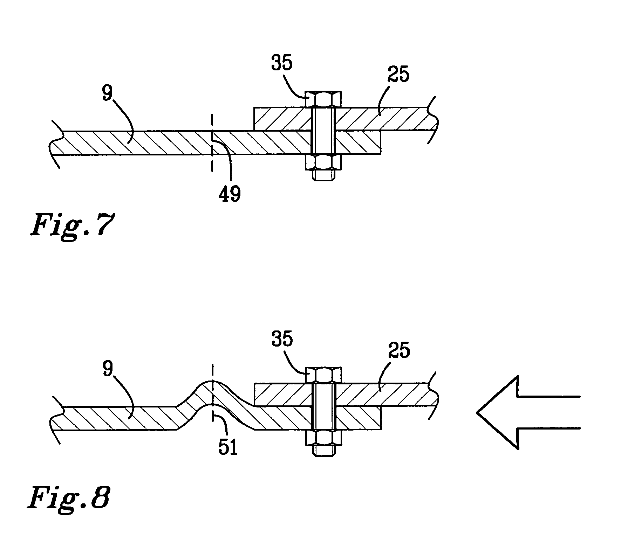

Figures 7 and 8 show a detailed view of an attachment, for example the attachment of the crash energy management structure 3 to the main structure of the vehicle, here exemplified by the attachment of the connecting member 25 to the rear side member 9. Figure 7 illustrates the normal position, while Figure 8 illustrates the situation during a collision. The connecting member 25 is pushed to the left in the Figure 8 by the impacting force. The material 49 of the main structure member just in front of the attachment is preformed, such that the material is deformed out of plane, thereby forming an abutment 51 preventing the connecting member 25 from being pushed further towards the centre of the vehicle. Thereby it is possible to make the attachment itself, here the bolt 35, weaker, since part of the impact force will be taken by the abutment 51.

A suitable material for a crash energy management structure 3 according to the invention would be metal or alloy, for example steel or aluminium. The first 11 and/ or second 13 member may be formed as a tubular structure, e.g. by extrusion. They may be welded to each other. The tubular structure may for example have an essentially circular, square or rectangular cross section. The connection members 23, 25 and/ or rear connection members 27, 29 may be formed of metal plates or metal sheets attached to the first 11 and/ or second 13 member by means of for example welding. In an alternative solution, the connection members 23, 25 and/ or rear connection members 27, 29 are extruded at the same time as the tubular structure as "wings". Excessive material may in that case be removed after extrusion.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Especially, although the exemplified crash energy management structures 3 of Figures 1-6 are illustrated as located at the rear portion of the vehicle 1, it would also useful to use a similar crash energy management structure at the front portion of the vehicle. It may then be located directly in front of an energy source containment unit 5 or it may be used to enhance the collision safety of the vehicle 1. If mounted at the front portion, it could primarily protect the energy source containment unit 5 in case of frontal collisions. The description above for Figures 1-6 is still applicable, but the directions would be reversed as compared to when the crash energy management structure 3 is located at the rear portion of the vehicle.

## Claims

1. A crash energy management structure (3) intended to be mounted at the rear or front portion of a vehicle (1) for protecting an energy source containment unit (5) of the vehicle (1) in case of a crash,
said crash energy management structure (3) comprising
- a first member (11), comprising a transverse portion (15) extending in the transverse direction of the vehicle (1), said first member (11) further having an inclined portion (17, 19) at each transversal end of the transverse portion (15),
- a second member (13), being parallel to said transverse portion (15) of said first member (11) and connecting said inclined portions (17, 19) or additional portions of each side of said first member (11), such that a frame-shaped structure (21) is formed,
**characterized by**
said frame-shaped structure (21) being adapted to be positioned between said energy source containment unit (5) of said vehicle (1) and a rear or front end of the vehicle (1) with said first member (11) being closer to said end of the vehicle (1) than said second member (13).

2. The crash energy management structure (3) according to claim 1, wherein the transverse extension of the transverse portion (15) of said first member (11) is less than the transverse extension of said second member (13).

3. The crash energy management structure (3) according to any one of the preceding claims, wherein said transverse extension (Y_{B}) of the transverse portion (15) of said first member (11) is 10-1000 mm, preferably 200-700 mm and most preferably 300-500 mm.

4. The crash energy management structure (3) according to any one of the preceding claims, wherein each of said inclined portions (17, 19) forms an angle β with the transverse portion (15) of said first member (11), said angle β being between 10° and 90°, preferably between 15° and 80°, and most preferably between 20° and 65°.

5. The crash energy management structure (3) according to any one of the preceding claims, wherein said first member (11) has an extension (X_{B}) in the longitudinal direction of the vehicle (1) of 100-500 mm, preferably 100-300 mm and most preferably 120-200 mm.

6. The crash energy management structure (3) according to any one of the preceding claims, wherein said crash energy management structure (3) further comprises two connection members (23, 25), being attached one at each transverse side of said crash energy management structure (3), said connection members (23, 25) being adapted to attach said crash energy management structure (3) to the main structure of said vehicle (1).

7. The crash energy management structure (3) according to any one of the preceding claims, wherein, in a collision situation, said crash energy management structure (3) is adapted to form a bending centre (39), such that the portion of said crash energy management structure (3) being located outside of said bending centre (39) is bendable around said bending centre (39).

8. The crash energy management structure (3) according to claim 7, when dependent on claim 6, wherein said connection members (23, 25) form said bending centre (39).

9. A vehicle (1) comprising
- an energy source containment unit (5), and
- a crash energy management structure (3) according to any one of the preceding claims
**characterized by**
said frame-shaped structure (21) of said crash energy management structure (3) being positioned between said energy source containment unit (5) of said vehicle (1) and a rear or front end of the vehicle (1) with said first member (11) being closer to said end of the vehicle (1) than said second member (13).

10. The vehicle (1) according to claim 9, wherein said crash energy management structure (3) further comprises two connection members (23, 25) attached one at each transverse side of said crash energy management structure (3), connecting said crash energy management structure (3) to the main structure of said vehicle (1), and wherein said transverse portion (15) of said first member (11) is attached at the rear or front end of said vehicle (1).

11. The vehicle (1) according to claim 10, wherein the material (49) of said main structure located just in front of/behind said connection members (23, 25) is preformed, such that, in case of a rear/frontal collision, wherein said crash energy management structure (3) is pushed forwards/rearwards, said material (49) just in front of/ behind said connection members (23, 25) is deformed out of plane, thereby forming an abutment (51) preventing said crash energy management structure (3) from being pushed further forwards/rearwards in the vehicle (1).

12. The vehicle (1) according to any one of claims 9 to 11, when dependent on claim 7, wherein said energy source containment unit (5) at its side towards said crash energy management structure (3) comprises an abutment (37), adapted to receive said crash energy management structure (3) after it has moved so far that a portion of it reaches said energy source containment unit (5).

13. The vehicle (1) according to any one of claims 9 to 12, wherein said crash energy management structure (3) is adapted such that objects are mountable thereto.

14. The use of a crash energy management structure (3) according to any one of claims 1 to 8 for distributing load between side members (7, 9) of a vehicle (1) in case of a collision.

15. The use of a crash energy management structure (3) according to any one of claims 1 to 8 for mechanical protection of said energy source containment unit (5) in case of a collision.

## Patentansprüche

1. Kollisionsenergie-Managementstruktur (3), die dafür bestimmt ist, an dem hinteren oder dem vorderen Abschnitt eines Fahrzeugs (1) befestigt zu sein, um eine Energiequellenumschließungseinheit (5) des Fahrzeugs (1) im Fall einer Kollision zu schützen,
wobei die Kollisionsenergie-Managementstruktur (3) Folgendes umfasst:
- ein erstes Element (11), das einen querverlaufenden Abschnitt (15) umfasst, der sich in der Querrichtung des Fahrzeugs (1) erstreckt, wobei das erste Element (11) ferner einen geneigten Abschnitt (17, 19) an jedem querverlaufenden Ende des querverlaufenden Abschnitts (15) besitzt,
- ein zweites Element (13), das parallel zu dem querverlaufenden Abschnitt (15) des ersten Elements (11) ist und die geneigten Abschnitte (17, 19) oder zusätzliche Abschnitte jeder Seite des ersten Elements (11) verbindet, so dass eine rahmenförmige Struktur (21) gebildet wird,
**dadurch gekennzeichnet, dass**
die rahmenförmige Struktur (21) dafür ausgelegt ist, zwischen der Energiequellenumschließungseinheit (5) des Fahrzeugs (1) und einem hinteren oder einem vorderen Ende des Fahrzeugs (1) angeordnet zu sein, wobei sich das erste Element (11) näher an dem Ende des Fahrzeugs (1) befindet als das zweite Element (13).

2. Kollisionsenergie-Managementstruktur (3) nach Anspruch 1, wobei die Querausdehnung des querverlaufenden Abschnitts (15) des ersten Elements (11) kleiner ist als die Querausdehnung des zweiten Elements (13).

3. Kollisionsenergie-Managementstruktur (3) nach einem der vorhergehenden Ansprüche, wobei die Querausdehnung (Y_{B}) des querverlaufenden Abschnitts (15) des ersten Elements (11) 10-1000 mm, vorzugsweise 200-700 mm und am stärksten bevorzugt 300-500 mm ist.

4. Kollisionsenergie-Managementstruktur (3) nach einem der vorhergehenden Ansprüche, wobei jeder der geneigten Abschnitte (17, 19) einen Winkel β mit dem querverlaufenden Abschnitt (15) des ersten Elements (11) bildet, wobei der Winkel β zwischen 10° und 90°, vorzugsweise zwischen 15° und 80° und am stärksten bevorzugt zwischen 20° und 65° liegt.

5. Kollisionsenergie-Managementstruktur (3) nach einem der vorhergehenden Ansprüche, wobei das erste Element (11) eine Ausdehnung (X_{B}) in der Längsrichtung des Fahrzeugs (1) von 100-500 mm, vorzugsweise 100-300 mm und am stärksten bevorzugt 120-200 mm hat.

6. Kollisionsenergie-Managementstruktur (3) nach einem der vorhergehenden Ansprüche, wobei die Kollisionsenergie-Managementstruktur (3) ferner zwei Verbindungselemente (23, 25) umfasst, von denen eines an jeder querverlaufenden Seite der Kollisionsenergie-Managementstruktur (3) angebracht ist, wobei die Verbindungselemente (23, 25) dafür ausgelegt sind, die Kollisionsenergie-Managementstruktur (3) an der Hauptstruktur des Fahrzeugs (1) anzubringen.

7. Kollisionsenergie-Managementstruktur (3) nach einem der vorhergehenden Ansprüche, wobei die Kollisionsenergie-Managementstruktur (3) in einer Situation des Zusammenstoßes dafür ausgelegt ist, eine Biegungsmitte (39) zu bilden, so dass der Abschnitt der Kollisionsenergie-Managementstruktur (3), der sich außerhalb der Biegungsmitte (39) befindet, um die Biegungsmitte (39) biegbar ist.

8. Kollisionsenergie-Managementstruktur (3) nach Anspruch 7, wenn abhängig von Anspruch 6, wobei die Verbindungselemente (23, 25) die Biegungsmitte (39) bilden.

9. Fahrzeug (1), das Folgendes umfasst:
- eine Energiequellenumschließungseinheit (5) und
- eine Kollisionsenergie-Managementstruktur (3) nach einem der vorhergehenden Ansprüche,
**dadurch gekennzeichnet, dass**
die rahmenförmige Struktur (21) der Kollisionsenergie-Managementstruktur (3) zwischen der Energiequellenumschließungseinheit (5) des Fahrzeugs (1) und einem hinteren oder einem vorderen Ende des Fahrzeugs (1) angeordnet ist, wobei sich das erste Element (11) näher an dem Ende des Fahrzeugs (1) befindet als das zweite Element (13).

10. Fahrzeug (1) nach Anspruch 9, wobei die Kollisionsenergie-Managementstruktur (3) ferner zwei Verbindungselemente (23, 25) umfasst, von denen eines an jeder querverlaufenden Seite der Kollisionsenergie-Managementstruktur (3) angebracht ist, die die Kollisionsenergie-Managementstruktur (3) mit der Hauptstruktur des Fahrzeugs (1) verbinden, und wobei der querverlaufende Abschnitt (15) des ersten Elements (11) an dem hinteren oder dem vorderen Ende des Fahrzeugs (1) angebracht ist.

11. Fahrzeug (1) nach Anspruch 10, wobei das Material (49) der Hauptstruktur, das direkt vor/hinter den Verbindungselementen (23, 25) angeordnet ist, so vorgeformt ist, dass im Falle eines hinteren/vorderen Zusammenstoßes, bei dem die Kollisionsenergie-Managementstruktur (3) vorwärts/rückwärts gedrückt wird, das Material (49) direkt vor/hinter den Verbindungselementen (23, 25) aus der Ebene verformt wird, wodurch ein Anschlag (51) gebildet wird, der verhindert, dass die Kollisionsenergie-Managementstruktur (3) weiter vorwärts/rückwärts in das Fahrzeug (1) gedrückt wird.

12. Fahrzeug (1) nach einem der Ansprüche 9 bis 11, wenn abhängig von Anspruch 7, wobei die Energiequellenumschließungseinheit (5) an ihrer Seite in Richtung der Kollisionsenergie-Managementstruktur (3) einen Anschlag (37) umfasst, der dafür ausgelegt ist, die Kollisionsenergie-Managementstruktur (3) aufzunehmen, nachdem sie sich so weit bewegt hat, dass ein Abschnitt von ihr die Energiequellenumschließungseinheit (5) erreicht.

13. Fahrzeug (1) nach einem der Ansprüche 9 bis 12, wobei die Kollisionsenergie-Managementstruktur (3) dafür ausgelegt ist, dass Gegenstände an ihr befestigt werden können.

14. Verwendung der Kollisionsenergie-Managementstruktur (3) nach einem der Ansprüche 1 bis 8, um im Fall eines Zusammenstoßes die Last zwischen den Seitenelementen (7, 9) eines Fahrzeugs (1) zu verteilen.

15. Verwendung der Kollisionsenergie-Managementstruktur (3) nach einem der Ansprüche 1 bis 8, um im Fall eines Zusammenstoßes die Energiequellenumschließungseinheit (5) mechanisch zu schützen.

## Revendications

1. Structure de gestion d'énergie de collision (3) destinée à être montée à la partie arrière ou avant d'un véhicule (1) pour protéger une unité de confinement (5) de source d'énergie du véhicule (1) en cas de collision,
ladite structure de gestion d'énergie de collision (3) comprenant
- un premier organe (11) comprenant une partie transversale (15) s'étendant dans la direction transversale du véhicule (1), ledit premier organe (11) ayant en outre une partie inclinée (17, 19) à chaque extrémité transversale de la partie transversale (15),
- un deuxième organe (13) parallèle à ladite partie transversale (15) dudit premier organe (11) et connectant lesdites parties inclinées (17, 19) ou lesdites parties supplémentaires de chaque côté dudit premier organe (11), de telle sorte qu'une structure en forme de cadre (21) soit formée,
**caractérisée en ce que**
ladite structure en forme de cadre (21) est prévue pour être positionnée entre ladite unité de confinement (5) de source d'énergie dudit véhicule (1) et une extrémité arrière ou avant du véhicule (1), ledit premier organe (11) étant plus proche de ladite extrémité du véhicule (1) que ledit deuxième organe (13).

2. Structure de gestion d'énergie de collision (3) selon la revendication 1, dans laquelle l'extension transversale de la partie transversale (15) dudit premier organe (11) est inférieure à l'extension transversale dudit deuxième organe (13).

3. Structure de gestion d'énergie de collision (3) selon l'une quelconque des revendications précédentes, dans laquelle ladite extension transversale (Y_{B}) de la partie transversale (15) dudit premier organe (11) est de 10-1000 mm, de préférence de 200-700 mm, et plus préférablement de 300-500 mm.

4. Structure de gestion d'énergie de collision (3) selon l'une quelconque des revendications précédentes, dans laquelle chacune desdites parties inclinées (17, 19) forme un angle β avec la partie transversale (15) dudit premier organe (11), ledit angle β étant compris entre 10° et 90°, de préférence entre 15° et 80°, et plus préférablement entre 20° et 65°.

5. Structure de gestion d'énergie de collision (3) selon l'une quelconque des revendications précédentes, dans laquelle ledit premier organe (11) a une extension (X_{B}) dans la direction longitudinale du véhicule (1) de 100-500 mm, de préférence de 100-300 mm et plus préférablement de 120-200 mm.

6. Structure de gestion d'énergie de collision (3) selon l'une quelconque des revendications précédentes, dans laquelle ladite structure de gestion d'énergie de collision (3) comprend en outre deux organes de connexion (23, 25) attachés respectivement au niveau de chaque côté transversal de ladite structure de gestion d'énergie de collision (3), lesdits organes de connexion (23, 25) étant prévus pour attacher ladite structure de gestion d'énergie de collision (3) à la structure principale dudit véhicule (1).

7. Structure de gestion d'énergie de collision (3) selon l'une quelconque des revendications précédentes, dans laquelle, dans une situation de collision, ladite structure de gestion d'énergie de collision (3) est prévue pour former un centre de flexion (39), de telle sorte que la partie de ladite structure de gestion d'énergie de collision (3) située à l'extérieur dudit centre de flexion (39) puisse fléchir autour dudit centre de flexion (39).

8. Structure de gestion d'énergie de collision (3) selon la revendication 7 lorsqu'elle dépend de la revendication 6, dans laquelle lesdits organes de connexion (23, 25) forment ledit centre de flexion (39).

9. Véhicule (1) comprenant :
- une unité de confinement (5) de source d'énergie et
- une structure de gestion d'énergie de collision (3) selon l'une quelconque des revendications précédentes,
**caractérisé en ce que**
ladite structure en forme de cadre (21) de ladite structure de gestion d'énergie de collision (3) est positionnée entre ladite unité de confinement (5) de source d'énergie dudit véhicule (1) et une extrémité arrière ou avant du véhicule (1), ledit premier organe (11) étant plus proche de ladite extrémité du véhicule (1) que ledit deuxième organe (13).

10. véhicule (1) selon la revendication 9, dans lequel ladite structure de gestion d'énergie de collision (3) comprend en outre deux organes de connexion (23, 25) attachés respectivement au niveau de chaque côté transversal de ladite structure de gestion d'énergie de collision (3), reliant ladite structure de gestion d'énergie de collision (3) à la structure principale dudit véhicule (1), et dans lequel ladite partie transversale (15) dudit premier organe (11) est attachée à l'extrémité arrière ou avant dudit véhicule (1).

11. Véhicule (1) selon la revendication 10, dans lequel le matériau (49) de ladite structure principale situé juste en avant de/derrière lesdits organes de connexion (23, 25) est préformé de telle sorte que, dans le cas d'une collision arrière/frontale, ladite structure de gestion d'énergie de collision (3) étant poussée vers l'avant/vers l'arrière, ledit matériau (49) juste en avant de/derrière lesdits organes de connexion (23, 25) soit déformé hors du plan, en formant ainsi une butée (51) empêchant ladite structure de gestion d'énergie de collision (3) d'être poussée davantage vers l'avant/vers l'arrière dans le véhicule (1).

12. Véhicule (1) selon l'une quelconque des revendications 9 à 11, lorsqu'elles dépendent de la revendication 7, dans lequel ladite unité de confinement (5) de source d'énergie, au niveau de son côté vers ladite structure de gestion d'énergie de collision (3), comprend une butée (37) prévue pour recevoir ladite structure de gestion d'énergie de collision (3) après qu'elle s'est déplacée dans une mesure telle qu'une partie de celle-ci atteigne ladite unité de confinement (5) de source d'énergie.

13. Véhicule (1) selon l'une quelconque des revendications 9 à 12, dans lequel ladite structure de gestion d'énergie de collision (3) est prévue de telle sorte que des objets puissent être montés sur celle-ci.

14. Utilisation d'une structure de gestion d'énergie de collision (3) selon l'une quelconque des revendications 1 à 8 pour répartir des charges entre les organes latéraux (7, 9) d'un véhicule (1) en cas de collision.

15. Utilisation d'une structure de gestion d'énergie de collision (3) selon l'une quelconque des revendications 1 à 8 pour la protection mécanique de ladite unité de confinement (5) de source d'énergie en cas de collision.
